# EUROPEAN PATENT SPECIFICATION

(11) **EP 3 174 701 B1**
(45) Date of publication and mention of the grant of the patent: **28.10.2020**
(21) Application number: 15747553.4
(22) Date of filing: 08.07.2015
(51) Int. Cl.: B29D 30/26, B29D 30/20

(54) **APPARATUS AND PROCESS FOR BUILDING TYRES FOR VEHICLE WHEELS**
VORRICHTUNG UND VERFAHREN ZUR HERSTELLUNG VON REIFEN FÜR FAHRZEUGRÄDER
APPAREIL ET PROCÉDÉ POUR LA CONSTRUCTION DE PNEUS POUR ROUES DE VÉHICULE

(30) Priority: 29.07.2014 IT MI20141374
(43) Date of publication of application: 07.06.2017
(73) Proprietor: Pirelli Tyre S.p.A., 20126 Milano (IT)
(72) Inventor: SACCHI, Sergio, 23900 Lecco (LC) (IT); PORTINARI, Gianni, 20126 Milano (IT)
(74) Representative: PGA S.p.A.
(86) International application number: PCT/IB2015/055158
(87) International publication number: WO 2016/016749

(56) References cited:
- EP-A1- 1 779 998
- EP-A1- 1 792 711
- EP-A2- 0 039 621
- WO-A1-2009/128046
- DE-B- 1 093 545
- JP-A- 2001 232 693
- JP-A- 2011 240 658

## Description

### Field of the finding

The object of the present invention is an apparatus and a process for building tyres for vehicle wheels.

A tyre for vehicle wheels generally comprises a carcass structure comprising at least one carcass ply having respectively opposite end flaps engaged with respective annular anchoring structures, generally termed "bead cores", integrated in the zones normally identified with the name "beads", having an internal diameter substantially corresponding to a so-called "fitting diameter" of the tyre on a respective mounting rim. The tyre further comprises a crown structure comprising at least one belt strip situated in radially outer position with respect to the carcass ply and a tread band that is radially outer with respect to the belt strip. A so-called "underlayer" made of elastomeric material, with properties suitable for ensuring a stable joining of the belt strip(s) with the tread band itself, can be interposed between the tread band and the belt strip(s). Respective sidewalls made of elastomeric material are also applied on the lateral surfaces of the carcass structure, each extended from one of the lateral edges of the tread band up to the respective annular anchoring structure to the beads. In the tyres of "tubeless" type, the carcass ply is internally covered by a layer of elastomeric material, preferably butyl-based, normally termed "liner" having optimal characteristics of impermeability to air and extended from one of the beads to the other.

It should be specified that, for the purpose of the present description and subsequent claims, with the term "elastomeric material" it is intended to indicate a composition comprising at least one elastomeric polymer and at least one reinforcement filler. Preferably, such composition further comprises additives such as, for example a cross-linking agent and/or a plasticizer. Due to the presence of the cross-linking agent, such material can be cross-linked, by means of heating, so as to form the final manufactured product.

By "component" of the tyre it is intended any functional component of the tyre (e.g. under-liner, liner, carcass ply/plies, fillers in the bead zone, belt strip(s), sidewalls, sidewall inserts in the self-supporting tyres, anti-abrasive insertions, underlayer, tread band, textile or metal reinforcements, reinforcement elements made of elastomeric material, etc.) or a portion thereof.

By "semifinished product" it is intended an elongated element, made only of elastomeric material or comprising further structural elements, delivered on a forming drum in order to form component of the tyre. The semifinished product is preferably defined by a continuous strip-shaped elongated element. Preferably said semifinished product is cut to size and has flattened cross section. Said semifinished product made of elastomeric material, preferably incorporates one or more textile or metal reinforcement cords. Such textile or metal reinforcement cords are arranged parallel to each other in the longitudinal direction of the elongated element itself or tilted with respect to said longitudinal direction. Said continuous elongated element is preferably delivered in circumferential sense on a forming drum, for example from a coil or from an extruder.

The expressions "distal" and "proximal" are in reference to the position of a vertical arm identified in the following description with the reference number 14.

### Background of the invention

The document WO 2013/011396, in the name of the same Applicant, illustrates an apparatus for building tyres for vehicle wheels in which a forming drum is loaded on a shuttle movable on a guide along a deposition line. The shuttle is moved on the guide in the two travel directions in order to carry it to delivery stations, for delivering semifinished products, arranged in deposition stations positioned according to a spatial succession along the deposition line. At each of the delivery stations, at least one semifinished product is arranged on a radially outer surface of the forming drum carried by the shuttle for forming at least one component of a tyre. The shuttle is moved on the guide according to a sequence different from the spatial succession of the deposition stations along the deposition line.

The document EP 1 779 998 illustrates an apparatus for building tyres which comprises a building drum formed by two portions that move axially close to and away from each other, and each portion can be radially expanded and contracted. The apparatus comprises an outer shaft, an intermediate shaft and a central shaft arranged coaxial with each other and means adapted to rotate such shafts. The intermediate shaft is connected to one of the portions of the drum and such portion is connected to the other portion in a manner so to be able to move in both axial directions. Cam elements adapted to expand and contract the portions of the drum are connected to the central shaft. The apparatus further comprises a first motor still connected to the intermediate shaft and to the central shaft and selectively connectable to the outer shaft and a second motor always connected to the central shaft. The relative axial approaching-moving away movement of the two portions is obtained by rotating the intermediate shaft,. The radial contraction and expansion of each of the two portions is obtained by rotating the central shaft. By rotating the three shafts together, the drum is rotated in order to wind strips thereon that are made of elastomeric material.

Document WO 2009/128046, in the name of the same Applicant, discloses an assembly station in which a carcass sleeve and an outer sleeve manufactured along respective building lines are mutually coupled. Integrated into the assembly station are engagement devices that can be alternatively coupled to an auxiliary drum carrying an outer sleeve and to a building drum carrying a carcass sleeve. The building drum is engaged on the assembly station before removal of the auxiliary drum. A grip unit picks up the outer sleeve from the auxiliary drum associated with the engagement devices in order to position it around the carcass sleeve carried by the building drum.

### Summary

Firstly, the Applicant observed that the apparatus illustrated in document EP 1 779 998 has intrinsic structural limitations with poor flexibility, which render it incompatible with current production requirements. Indeed, given that the building drum is integral with the shafts of the apparatus and with the base thereof, this signifies that the apparatus can be used for building only one tyre at a time and that the drum cannot be moved between different building stations if not together with the entire movement system, which is heavy and bulky.

The Applicant has also observed that the apparatus described and illustrated in document WO 2013/011396 can be improved with regard to several aspects, in particular with reference to the reduction of the building times, which are critically affected by the speed with which the forming drums are moved between one delivery station and the next and the spatial extension of the apparatus itself, or by the distance between one delivery station and the next.

In such context, the Applicant proposes increasing the flexibility of the plants for producing tyres, limiting the space necessary for placing production apparatuses and reducing the building times.

In particular, the Applicant felt the importance of improving the aspects pertaining to the grip of the forming drums, their transport to different delivery stations, for the deposit/winding of the semifinished products, and their release.

The Applicant then wishes to build tyres by exploiting increasingly more limited spaces dedicated to the relative plants.

The Applicant thus set to solve the problem of arranging a process / apparatus adapted to pick up, transport and support compact and light forming drums, in order to move said drums even into limited spaces, and simultaneously comprising an entire series of actions / mechanisms adapted to fully manage drums of radially collapsible type.

The Applicant finally found that, by arranging a grip unit comprising grip devices (for coupling and releasing the drums) arranged on concentric and coaxial shafts, it is possible to overcome the above-illustrated drawbacks, obtaining the necessary functions of movement of the drums with a compact and light structure. More specifically, according to claim 1, the present invention relates to a process for building tyres for vehicle wheels.

Provision is made for arranging a forming drum having a radially outer surface and comprising a first body and a second body that are movable with respect to each other, wherein a relative movement between said first body and said second body causes the passage between a radially contracted configuration and a radially expanded configuration of the radially outer surface.

Provision is made for coupling the forming drum by means of a grip unit of a handling device.

Provision is made for carrying said forming drum, by means of the handling device, to at least one delivery station for delivering semifinished products and making it rotate around a symmetry axis thereof in order to wind at least one semifinished product on the radially outer surface and form a sleeve.

Provision is made for contracting the radially outer surface of the forming drum in order to release the sleeve from said drum.

According to claim 1 coupling the forming drum comprises: removably engaging the first body of the forming drum with first grip devices associated with a first shaft of the grip unit; removably engaging the second body of the forming drum with second grip devices associated with a second shaft of the grip unit coaxial with and external with respect to said first shaft.

According to claim 9, the present invention relates to an apparatus for building tyres for vehicle wheels.

Provision is made for at least one forming drum having a radially outer surface and comprising a first body and a second body that are movable with respect to each other, wherein a relative movement between said first body and said second body causes the passage between a radially contracted configuration and a radially expanded configuration of the radially outer surface.

Provision is made for at least one delivery station for delivering semifinished products.

Provision is made for a handling device configured for carrying said forming drum to said at least one delivery station for delivering semifinished products and for making it rotate around the symmetry axis thereof.

The handling device comprises at least one grip unit.

The grip unit comprises: a support frame.

The grip unit comprises a first shaft comprising first grip devices associated with said first shaft; wherein said first grip devices are removably engageable with the first body of the forming drum.

The grip unit comprises a second shaft coaxial and external with respect to the first shaft and rotatably mounted on the support frame around the symmetry axis.

The first shaft is rotatably mounted in the second shaft.

The second shaft comprises second grip devices associated with said second shaft.

Said second grip devices are removably engageable with the second body of the forming drum.

The grip unit comprises at least one motor adapted to rotate the first shaft and/or the second shaft.

The Applicant deems that the process and the apparatus according to the invention, due to the particular structure of the grip unit and to the compactness and lightness that derive therefrom, allow reducing the building times of the tyres since the movement of the forming drums between the delivery stations is sped up and the management of the configuration of said forming drums is optimized.

The Applicant also deems that the process and the apparatus according to the invention allow limiting the spaces intended for the placement of the apparatus and above all for the movement of the drums.

The Applicant has also observed that it is possible to contract the forming drum in any position where it is situated, without having to place the contraction devices at several points of the apparatus since the mechanisms that change the radial configuration of the forming drum are integrated in the mechanism that manages the rotation thereof.

The present invention, in at least one of the aforesaid aspects, can have one or more of the preferred characteristics that are described hereinbelow.

Preferably said first grip devices are placed at a distal end of said first shaft.

Preferably said second grip devices are placed at a distal end of said second shaft.

Preferably, the forming drum comprises a plurality of circumferential sectors defining the radially outer surface.

Preferably, the first body is radially central e has first mechanisms for connecting with the circumferential sectors.

Preferably, the second body is radially central and has second mechanisms for connecting with said circumferential sectors.

Preferably, by means of a relative rotation of the first body and the second body, the circumferential sectors are radially movable between the radially contracted configuration and the radially expanded configuration.

Preferably, the first radially central body is coaxial with the symmetry axis.

Preferably, the second radially central body is coaxial with the symmetry axis.

Preferably, the first radially central body has a substantially cylindrical or tubular shape.

Preferably, the second radially central body has a substantially cylindrical or tubular shape.

Preferably, the circumferential sectors are formed by first circumferential sectors and second circumferential sectors, alternated with each other along the circumferential extension of the forming drum.

In the radially expanded configuration, the first circumferential sectors and the second circumferential sectors are situated substantially at the same radial distance from the symmetry axis and their radially outer surfaces define the radially outer surface of the forming drum. In the passage from the radially expanded configuration to the radially contracted configuration, the first circumferential sectors radially approach the symmetry axis more than the second circumferential sectors. In the radially contracted configuration, the first circumferential sectors are therefore situated in a radially more internal position with respect to the second circumferential sectors. In other words, two adjacent circumferential sectors are radially contracted in a different manner and, in the contracted configuration, one of said two sectors is moved into a radially more internal position than the other. Such structure allows obtaining the radial contraction of the forming drum, even employing rigid sectors.

Preferably, at least in the expanded configuration, the radially outer surface of the forming drum is substantially continuous so as to provide a continuous abutment for the semifinished products.

Preferably, the first connection mechanisms comprise rods constrained to the first central body and slides slidable on said rods and connected to the circumferential sectors or vice versa.

Preferably, the rods are radially extended from the first central body.

Preferably, the slides are integral with respective circumferential sectors.

The circumferential sectors are therefore radially movable with respect to the first central body but cannot rotate around said first central body.

Preferably, the second connection mechanisms comprise connecting rods, each hinged to the second central body and to one of the circumferential sectors.

The relative motion between the second central body and the circumferential sectors is therefore both radial and rotational around the symmetry axis. The relative rotation between the first and the second central body around the symmetry axis in a first rotational direction causes the rotation of the connecting rods around the symmetry axis and with respect to the circumferential sectors. The connecting rods therefore drive said circumferential sectors towards the symmetry axis, and towards the first and the second central body, guided in such motion by the rods. The relative rotation between the first and the second central body around the symmetry axis in a second rotational direction, opposite the first, ensures that connecting rods push radially outward the circumferential sectors which radially move away from the symmetry axis, and from the first and second central body, always guided by said rods.

Preferably, the first grip devices comprise a gripper. Said gripper is preferably pneumatic.

Preferably, the forming drum comprises an axially projecting element.

Preferably, the axially projecting element of the forming drum is integral with the first central body.

Preferably, the axially projecting element of the forming drum is conical. Preferably, the first grip devices have a seat defined at the distal end of the first shaft and configured for housing said axially projecting element.

Preferably, for removably engaging the first body of the forming drum with the first grip devices, the axially projecting element of the forming drum is arranged in a seat defined at the distal end of the first shaft.

Preferably, the gripper is inside said seat.

Preferably, said axially projecting element is configured for being coupled by the gripper.

Preferably, the axially projecting element of the forming drum has a shaped end adapted to be gripped by the gripper.

The grip unit couples the forming drum by inserting the axially projecting element in the seat of the first shaft and the closure of the gripper on the shaped end. The conicity of the axially projecting element facilitates the insertion thereof in said seat and ensures the precision and repeatability of the operation. The gripper ensures the axial integrity between the grip unit and the forming drum and, preferably, also makes the first body and the first shaft integral in rotation.

Preferably, an auxiliary shaft is coaxial with and inside the first shaft and carries said gripper at a distal end thereof.

Preferably, the auxiliary shaft is integral in rotation with the first shaft.

Preferably, the auxiliary shaft is axially movable in the first shaft between an uncoupled position, in which the gripper is open, and a coupled position, in which the gripper is closed.

Preferably, in the uncoupled position the auxiliary shaft is advanced towards the distal end of the first shaft, and in the coupled position the auxiliary shaft is retreated towards the proximal end of the same first shaft.

Preferably, abutment elements are operating on arms of the gripper and are configured for moving the gripper between the open position and the closed position by means of the axial movement of the auxiliary shaft.

Preferably, said abutment elements are radially outer with respect to the gripper. Preferably, said abutment elements are integral with the first shaft.

The gripper is actuated by moving the auxiliary shaft which acts as transmission of the motion generated by an actuator situated far from the gripper and hence in a position outside the working area.

Preferably, the actuator is pneumatic.

Preferably, the actuator is operatively connected to the auxiliary shaft in order to axially move it.

Preferably, said actuator is placed at a proximal end of said auxiliary shaft.

The actuator remains distant from the forming drum and hence does not obstruct the coupling and uncoupling operations thereof.

Preferably, the first grip devices have at least one key defined at the distal end of the first shaft and configured for being axially and removable inserted in a respective recess delimited in the first body of the forming drum.

Preferably, the first grip devices have two keys placed on opposite sides with respect to the symmetry axis.

Preferably said key(s) are shaped on one edge of the distal end that has tubular shape. The key/keys prevents/prevent relative rotational movements. In such a manner, it allows/they allow transmitting the motion from the first body to the first shaft of the forming drum.

Preferably, the second grip devices comprise at least one key defined at the distal end of the second shaft and configured to be axially and removably inserted in a respective recess delimited in the second body of the forming drum.

Preferably, the second grip devices have two keys placed on opposite sides with respect to the symmetry axis.

Preferably said key/keys is/are shaped on one edge of the distal end of the second shaft which has tubular shape.

The key/keys prevents/prevent relative rotational movements between the second body and the second shaft. In such a manner, it allows/they allow transmitting the motion from the second body to the second shaft of the forming drum.

Preferably, for removably engaging the first body of the forming drum with the first grip devices, provision is made for coupling, with a gripper belonging to the first grip devices, an axially projecting element of the forming drum.

Preferably, for removably engaging the first body of the forming drum with the first grip devices, provision is made for axially and removably inserting at least one key defined at the distal end of the first shaft in a respective recess delimited in the first body of the forming drum.

Preferably, for removably engaging the second body of the forming drum with the second grip devices, provision is made for axially and removably inserting at least one key defined at the distal end of the second shaft in a respective recess delimited in the second body of the forming drum.

Preferably, the grip unit comprises a first motor operatively connected to the first shaft in order to make it rotate around the symmetry axis. Preferably, the first motor is mounted on the support frame.

Preferably, the grip unit comprises a second motor operatively connected to the second shaft in order to make it rotate around the symmetry axis.

Preferably, the second motor is mounted on the support frame. The two motors can be driven together or independently in order to move the shafts.

Preferably, a first transmission connects the first motor to the first shaft. Preferably the first transmission comprises a first belt. Preferably the first transmission comprises a first toothed wheel coaxial with the symmetry axis and integral with the first shaft.

Preferably, a second transmission connects the second motor to the second shaft.

Preferably the second transmission comprises a second belt. Preferably the second transmission comprises a second toothed wheel coaxial with the symmetry axis and integral with the second shaft.

Preferably the first and the second transmission are independent from each other. Such solution is simple, and thus inexpensive and reliable.

Preferably, the handling device comprises a control unit operatively connected at least to the first motor and to the second motor.

Preferably, the control unit is configured to control the first motor and the second motor in electrical axis and rotate the first shaft and the second shaft, integral with each other, in order to rotate the first central body and the second central body, integral with each other, of the forming drum.

Preferably, rotating the forming drum comprises: rotating, integral with each other, the first shaft and the second shaft in order to rotate together the first body and the second body of the forming drum.

Thus, the drum rotates around the symmetry axis without varying its configuration since the central bodies, the connecting rods, the rods and the circumferential sectors remain stationary with respect to each other.

Preferably, the control unit is configured for controlling only the second motor and rotating only the second shaft and keeping the first shaft fixed.

Preferably, contracting the radially outer surface of the forming drum comprises: rotating only the second shaft and keeping the first shaft fixed in order to rotate only the second body of the forming drum.

Thus, only the second body of the forming drum is rotated and the radially outer surface is moved between the radially contracted configuration and the radially expanded configuration. In addition, since the rods remain fixed with the first body, the movement of the sectors is merely radial such that, during the contraction, one prevents any sliding of the formed sleeve with respect to a possible automatic grip device adapted to pick up said sleeve from the drum.

Preferably, the control unit is configured for rotating the second shaft and the first shaft with rotation speeds that are different from each other.

Also in this case, one obtains the contraction or expansion of the radially outer surface.

Preferably, the control unit is configured for controlling the actuator and axially moving the auxiliary shaft.

The control unit therefore commands the opening and closing of the gripper.

Preferably, the grip unit has at least one suction duct passing inside the first shaft and in fluid communication with suction ducts leading to the outer surface of the forming drum.

Preferably, said suction duct is inside the auxiliary shaft.

Preferably, said suction duct has one end in fluid communication with ducts made in the first body of the forming drum and an opposite end in fluid communication with pneumatic rotary joint.

Preferably, said opposite end is situated at the proximal ends of the first and the second shaft.

Preferably, the grip unit comprises a movement group for moving a first annular support element to be associated with the forming drum.

The first annular support element is moved close to the forming drum in order to enlarge the abutment surface of the semifinished product and receive one of the axial end flaps of the sleeve that is formed.

Preferably, provision is made for arranging a first annular support element on the grip unit; axially moving the first annular support element close to the forming drum, in which said first annular support element has an auxiliary radially outer surface intended to receive an axial end flap of said at least one semifinished product.

Preferably, the first annular support element is arranged coaxial around the first shaft and second shaft.

Preferably, said movement group is supported by the support frame.

Preferably, said movement group is situated in radially outer position with respect to the second shaft.

Preferably, the movement group comprises a support member for the first annular support element and at least one movement device operatively connected to the support member in order to axially move said support member and said first annular support element between a position in which the first annular support element lies close to the forming drum and a position in which the first annular support element is axially spaced from said forming drum.

Preferably, axially moving close comprises: axially moving a support member belonging to the grip unit and carrying the first annular support element towards the forming drum.

Since the grip unit also carries with it one of the auxiliary support elements to move close to the forming drum, there is no need to pick up/release said first annular support element in a suitable station, and this contributes to speeding up the building time.

Preferably, the movement device is a pneumatic cylinder.

More preferably the movement device comprises two pneumatic cylinders.

Preferably, the movement device is operatively interposed between the support frame and the support member.

Preferably, said at least one pneumatic cylinder is extended substantially parallel to the symmetry axis and alongside the first and second shaft.

Preferably, said at least one pneumatic cylinder is in fluid connection with the abovementioned pneumatic rotary joint.

Preferably, the movement group comprises an axial guide placed at least around the distal ends of the first shaft and the second shaft, in which the support member is carried by said axial guide.

Preferably, the axial guide is integral with the support frame.

Preferably, the axial guide is a tubular body coaxial with the symmetry axis.

Preferably, the axial guide is axially extended beyond the distal ends of the first shaft and second shaft and, when the forming drum is coupled to the grip unit, surrounds the projecting element of said drum.

The guide therefore also protects the first and the second grip devices.

Preferably, the support member comprises a slide axially movable on the axial guide.

Preferably, the support member comprises an annular body free to rotate on the slide around the symmetry axis and having a radially outer portion adapted to be engaged with the first annular support element.

The support member is translated on the axial guide by said at least one pneumatic cylinder. The annular body is driven in rotation together with the first annular support element by the forming drum, which rotates with the first and the second shaft. For such purpose the first annular support element is preferably magnetically coupled to the forming drum.

Preferably, the apparatus comprises a second annular support element having a second auxiliary radially outer surface intended to receive an axial end flap of said at least one semifinished product.

Preferably, provision is made for axially moving the second annular support element close to the forming drum on the side axially opposite said first annular support element.

Preferably, the second annular support element is removably coupled to the forming drum.

Preferably, the second annular support element is magnetically coupled to the forming drum.

Preferably, the grip unit carries the forming drum to a housing station of the second annular support element for coupling the second annular support element to the forming drum or uncoupling the same from the forming drum.

Preferably, the apparatus comprises a work station for the positioning of annular anchoring structures reachable by the grip unit.

Preferably, said forming drum with the formed sleeve is carried, by means of the handling device, to the work station for the positioning of annular anchoring structures.

Preferably, the forming drum is uncoupled from the grip unit and releasing said forming drum in the work station for the positioning of annular anchoring structures.

Preferably, said annular anchoring structures are positioned on axially opposite edges of the sleeve and turning up said flaps around said annular anchoring structures.

It should be noted that the separation of the grip unit from the forming drum also separates the first annular support element from the drum, so that the end flap supported thereby is free for the positioning and turning up operations.

Alternatively, the first annular support element is separated by axially moving the support member away from the forming drum.

Preferably, before carrying said forming drum with the formed sleeve to the work station for positioning the annular anchoring structures, the second annular support element is separated from the forming drum.

Preferably, the second annular support element is released into the housing station.

In this manner, also the other end flap is freed for the positioning and turning up operations.

Preferably, after the positioning and turning up and before contracting the radially outer surface, provision is made for newly coupling the forming drum by means of the grip unit, in which the forming drum carries the formed sleeve with the annular anchoring structures.

Further characteristics and advantages will be clearer from the detailed description of a preferred but not exclusive embodiment of an apparatus and of a process in accordance with the present invention.

### Description of the drawings

Such description will be set forth hereinbelow with reference to the enclosed drawings, provided only as a non-limiting example in which:
- figure 1 shows a schematic plan view of an apparatus for building tyres for vehicle wheels according to the present invention;
- figure 2 illustrates a perspective view of a portion of the apparatus of figure 1;

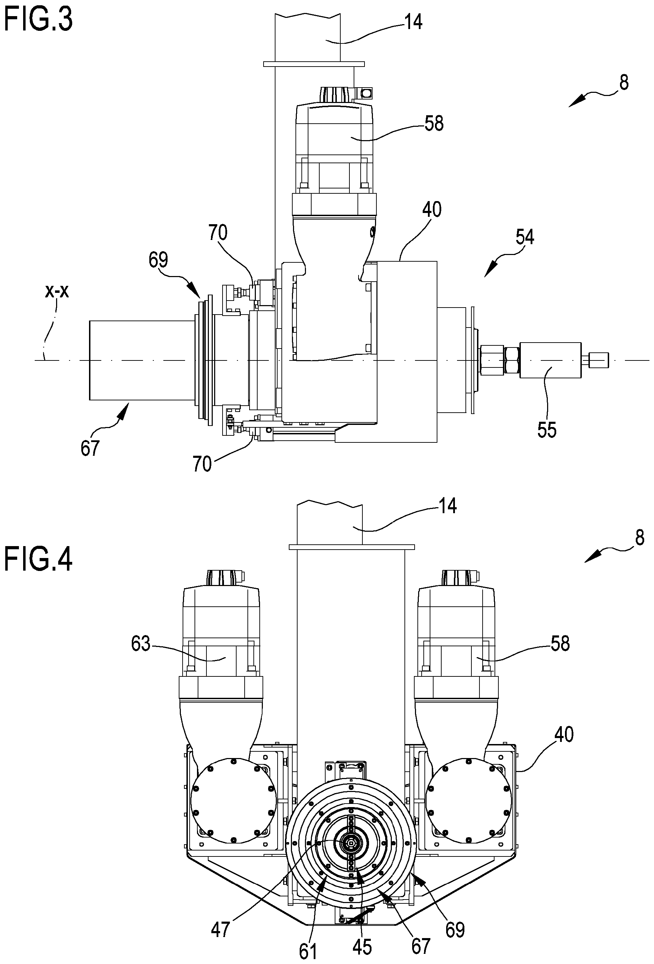

- figure 3 is an enlarged side view of a grip unit of the apparatus pursuant to the preceding figures associable with a forming drum;
- figure 4 is a front view of the grip unit of figure 3;
- figure 5 illustrates a front view of the forming drum in a first operative configuration;
- figure 6 illustrates the forming drum of figure 5 in a second operative configuration;
- figure 7 is a section view on an axial plane of the forming drum of figure 5;
- figure 8 is a section view of a part of the grip unit of figure 3;
- figure 9 is an enlargement of a portion of figure 8;
- figure 10 illustrates the grip unit of figure 3 complete with forming drum in a first operative configuration;
- figure 11 illustrates the grip unit of figure 3 in a second operative configuration;
- figure 12 shows a radial half-section of a tyre for motor vehicles built using the apparatus of figure 1;
- figure 13 shows a radial section of a tyre for motor vehicles built using the apparatus of figure 1.

### Detailed description

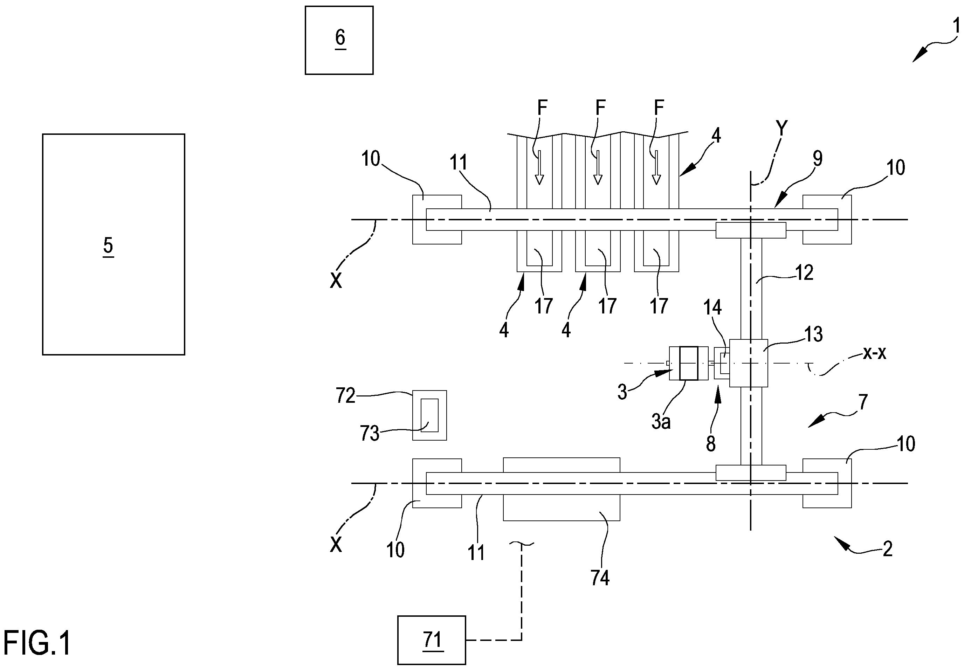

With reference to figure 1, reference number 1 overall indicates an apparatus for building tyres 100 for vehicle wheels in accordance with the present invention.

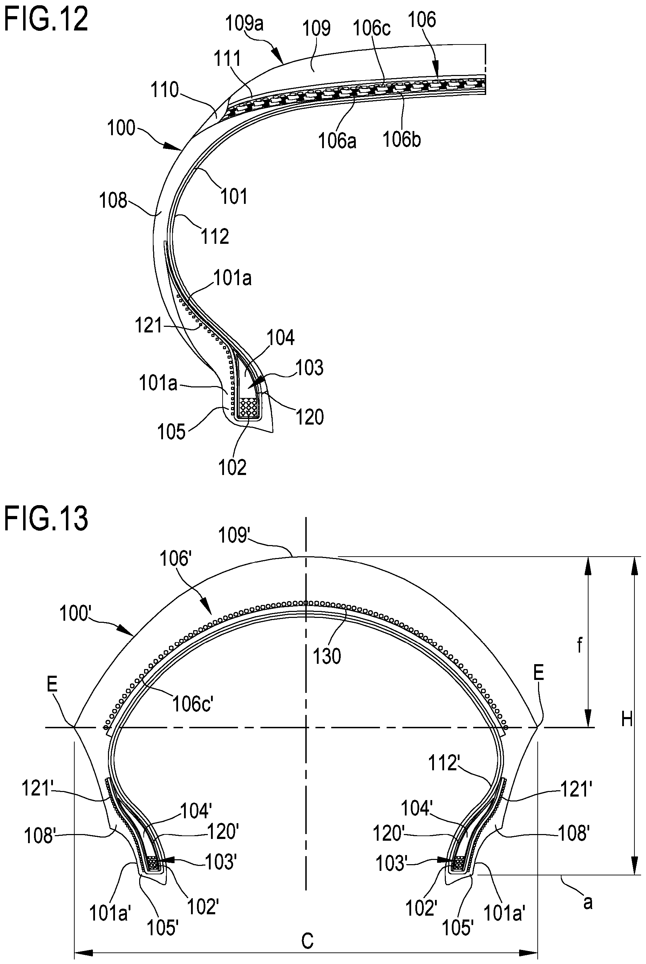

A tyre 100 for motor vehicles, obtained in said apparatus 1 and according to the process in accordance with the present invention, is illustrated in figure 12 and comprises at least one carcass structure, comprising at least one carcass ply 101 having respectively opposite end flaps engaged with respective annular anchoring structures 102, termed bead cores, possibly associated with a filler insert 104. The zone of the tyre 100 comprising the annular anchoring structure 102 and the filler insert 104 forms a bead 103, intended for the anchoring of the tyre 100 on a corresponding mounting rim, not illustrated. Each bead 103 is associated with the carcass structure by means of backward folding of the opposite lateral edges of the at least one carcass ply 101 around the annular anchoring structure 102 in a manner so as to form the so-called turn-ups 101a of the carcass structure. An anti-abrasive element 105 made with elastomeric material can be arranged in an external position of each bead 103. The carcass structure is associated with a belt structure 106 comprising one or more belt layers 106a, 106b having textile or metal reinforcement cords and situated in radial superimposition with respect to each other and with respect to the at least one carcass ply 101. Such reinforcement cords can have cross orientation with respect to a circumferential extension direction of the tyre 100. By "circumferential" direction it is intended a direction generically directed according to the rotation direction of the tyre 100. In radially more external position with respect to the belt layers 106a, 106b, at least one zero degree reinforcement layer 106c can be applied, commonly known as "0° belt", which generally incorporates a plurality of reinforcement cords, typically textile cords, oriented in a substantially circumferential direction, thus forming an angle of a few degrees (e.g. an angle between about 0° and about 6°) with respect to the axial centerline plane of the tyre 100, and covered with an elastomeric material. In radially outer position with respect to the belt structure 106, a tread band 109 is applied that is made of elastomeric material, like other semifinished products constituting the tyre 100. Respective sidewalls 108 made of elastomeric material are also applied in axially outer position on the lateral surfaces of the carcass structure, each extended from one of the lateral edges of the tread band 109 up to the respective bead 103. In radially outer position, the tread band 109 has a rolling surface 109a intended to come into contact with the ground. Circumferential grooves, which are connected by transverse notches so as to define a plurality of blocks of various shape and size distributed on the rolling surface 109a, are generally obtained in this surface 109a, which is represented smooth in figure 12 for the sake of simplicity. An underlayer 111 can possibly be deposited between the belt structure 106 and the tread band 109. One component of the tyre 100 constituted by elastomeric material, commonly known as "mini-sidewall" 110, can possibly be present in the zone of connection between the sidewalls 108 and the tread band 109. This mini-sidewall 110 is generally obtained by means of co-extrusion with the tread band 109 and allows an improvement of the mechanical interaction between the tread band 109 and the sidewalls 108. Preferably, the end portion of the sidewall 108 directly covers the lateral edge of the tread band 109. In the case of tyres 100 without air chamber, a layer of elastomeric material, generally known as "liner" 112, which provides the necessary impermeability to the inflation air of the tyre 100, can be provided in a radially inner position with respect to said at least one carcass ply 101. The rigidity of the sidewall 108 of the tyre can be improved by providing the bead 103 with a reinforcement layer 120 generally known as a "flipper" or additional strip-like insert. The "flipper" 120 is a reinforcement layer that is wound around the respective annular anchoring structure 102 and the filler insert 104 in a manner so as to at least partially surround them, said reinforcement layer being arranged between the at least one carcass ply 101 and the bead 103. Usually, the "flipper" is in contact with said at least one carcass ply 101 and said bead 103. The "flipper" 120 typically comprises a plurality of textile or metallic cords incorporated in a recycled elastomeric material. The bead 103 can comprise a further protection layer which is generally known with the term "chafer" 121 or protection layer and which has the function of increasing rigidity and integrity of the same bead 103. The "chafer" 121 usually comprises a plurality of cords incorporated in a cross-linked elastomeric material. The cords are generally made of textile materials or metallic materials.

A tyre 100' for motor vehicles, obtained in said apparatus 1 and according to the process in accordance with the present invention, is illustrated in figure 13. Elements of such tyre for motor vehicles 100' corresponding to elements described above for the tyre of figure 12 are indicated with the same reference numbers provided with apostrophe. The belt structure 106' of such tyre for motor vehicles 100' is generally constituted by a layer 106c' which has a plurality of circumferential windings arranged axially side-by-side, formed by a rubber-covered cord. The illustrated tyre 100' comprises a layer made of elastomeric material 130 placed between its carcass structure and said belt structure 106'. The tyre 100' for motor vehicles has a cross section marked by a high transverse curvature. In particular, the tyre 100' for motor vehicles has a section height "H" measured, on the axial centerline plane, between the top of the tread band 109' and the fitting diameter, identified by the reference line "a", passing through the beads 103' of the tyre 100'. The tyre 100' for motor vehicles also has a width "C" defined by the distance between the laterally opposite ends "E" of the tread band 109' itself, and a curvature defined by the particular value of the ratio between the distance "f" of the top of the tread band 109' from the line passing through the ends "E" of the tread band itself 109', measured on the axial centerline plane of the tyre 100', and the aforesaid width "C". By tyres with high curvature, it is intended tyres which have a curvature ratio f/C not less than 0.2, preferably f/C ≥ 0.25 e.g. 0.28. Preferably such curvature ratio f/C is not greater than 0.8, preferably f/C ≤0.5. Preferably, the curvature ratio (f/C) can be substantially comprised between 0.35 and 0.70, still more preferably between 0.35 and 0.60. Preferably, the tyres for motor vehicles have sidewalls that are particularly low. In other words, by tyres with low or lowered sidewalls it is intended tyres in which the sidewall height ratio (H-f)/H is less than 0.7, more preferably less than 0.65, e.g. 0.6. Preferably, the (total height)/chord (H/C) ratio is substantially comprised between 0.6 and 1.

The abovementioned components of the above-described tyres 100, 100' are obtained on one or more forming drums by moving said drums between different delivery stations for delivering semifinished products, at each of which suitable devices applying the aforesaid semifinished products on the forming drum(s).

The apparatus 1, schematically illustrated in its entirety in the enclosed figure 1, comprises a carcass building line 2, at which forming drums 3 are moved between different delivery stations 4 for delivering semifinished products, arranged to form for example, on each forming drum 3, a carcass sleeve comprising (for example) the carcass ply/plies 101, 101', the liner 112, 112', the annular anchoring structures 102, 102', the "flippers" 120, 120', the "chafers" 121, 121' and possibly at least one part of the sidewalls 108, 108'.

Simultaneously, in an external sleeve building line 5, one or more auxiliary drums, not illustrated, are moved between different work stations, not illustrated, arranged to form an external sleeve on each auxiliary drum, comprising at least the belt structure 106, 106', the tread band 109, 109', the anti-abrasive elements 105, 105', and possibly at least one part of the sidewalls 108, 108'.

The plant 1 further comprises an assembly station 6 at which the external sleeve is coupled to the carcass sleeve, in order to define the built green tyre 100, 100'. The built green tyres 100, 100' are finally transferred to at least one shaping, molding and vulcanizing unit, not illustrated.

The carcass building line 2 comprises a handling device 7 having at least one grip unit 8 configured for supporting and transporting at least one forming drum 3 at a time and for making it rotate around a longitudinal symmetry axis "x-x" thereof. The handling device 7 comprises a perimeter frame 9 formed by four vertical uprights 10 placed at the corners of a substantially rectangular maneuvering zone (seen in plan view like in figure 1). Each upright 10 has a base set on the ground and an upper end which supports a horizontal beam defining a horizontal guide 11. In particular, in the illustrated embodiment, the handling device 7 comprises two horizontal guides 11 parallel to each other and each supported by two uprights 10. The horizontal guides 11 are extended along a first direction "X".

The two horizontal guides 11 carry a horizontal arm 12 which is extended between said two horizontal guides 11 along a second direction "Y" perpendicular to the first direction "X". The horizontal arm 12 is mounted on the horizontal guides 11 through *per se* known mechanisms (hence not described in detail) which allow the translation thereof, actuated by means of one or more non-illustrated motors, on the guides 11 and along the first direction "X".

A trolley 13 is mounted on the horizontal arm 12 through *per* se known mechanisms (hence not described in detail) which allow the translation thereof, actuated by means of one or more non-illustrated motors, on said horizontal arm 12 and along the second direction "Y".

A vertical arm 14 is extended along a third direction "Z" perpendicular to the first two directions "X", "Y" and is mounted on the trolley 13 through *per* se known mechanisms (hence not described in detail) which allow the translation thereof, actuated by means of one or more motors, on said trolley 13 and along the third direction "Z".

A lower end of the vertical arm 14 carries the grip unit 8. The horizontal guides 11, the horizontal arm 12, the trolley 13 and the vertical arm 14 together with the respective motors, not illustrated, define raised movement devices for the grip unit 8 which remains hung from said movement devices 11, 12, 13, 14. The perimeter frame 9 of the handling device 7 delimits a maneuvering space in which the grip unit 8 is moved in the three dimensions.

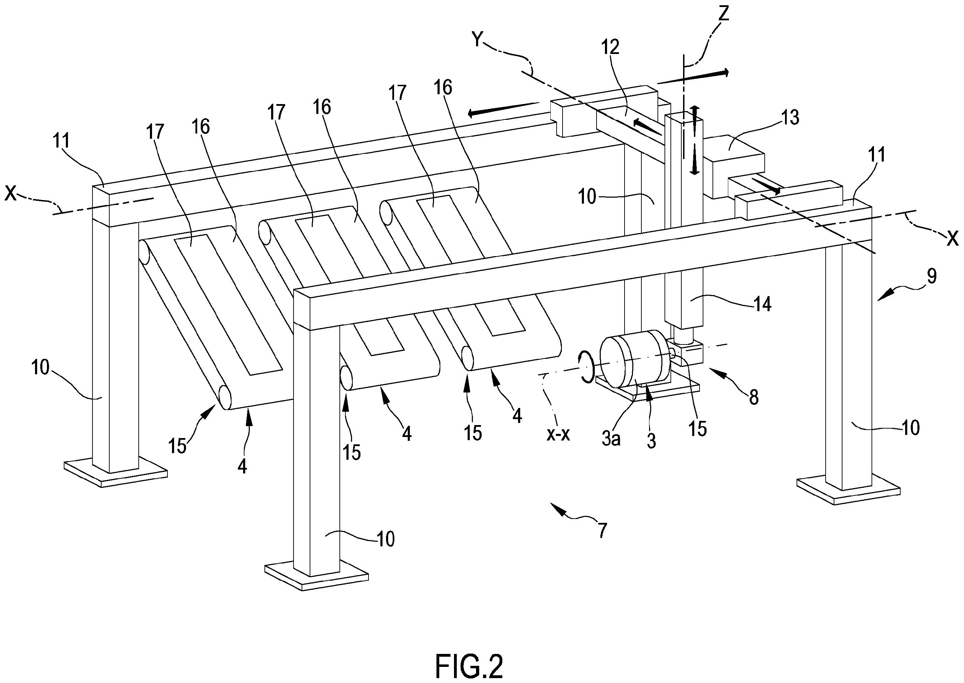

The illustrated carcass building line 2 comprises three delivery stations 4 for delivering semifinished products, such stations being placed side-by-side each other. In figures 1 and 2, the terminal portions of such delivery stations 4 are schematically represented and have ends situated in the maneuvering space. Each delivery station 4 comprises a conveyor belt 15 wound on rollers and having an upper branch 16 on which a semifinished product 17 is abutted and advanced along a feed direction "F", such semifinished product 17 cut to size and intended to be wound on the forming drum 3. In a non-illustrated embodiment, the conveyor belts 15 are arranged on top of each other on multiple levels. In a further non-illustrated embodiment, the conveyor belts 15 are arranged both side-by-side and on top of each other on multiple levels.

The forming drum 3 is carried, by means of the handling device 7, to each of the terminal ends of each conveyor belt 15, until a radially outer surface 3a with respect to said drum 3 is rested on a head of the semifinished product 17. The forming drum 3 is rotated around the symmetry axis "x-x" while the conveyor belt 15 and the semifinished product 17 therewith are advanced along the feed direction "F", causing the winding of said semifinished product 17 on said radially outer surface 3a.

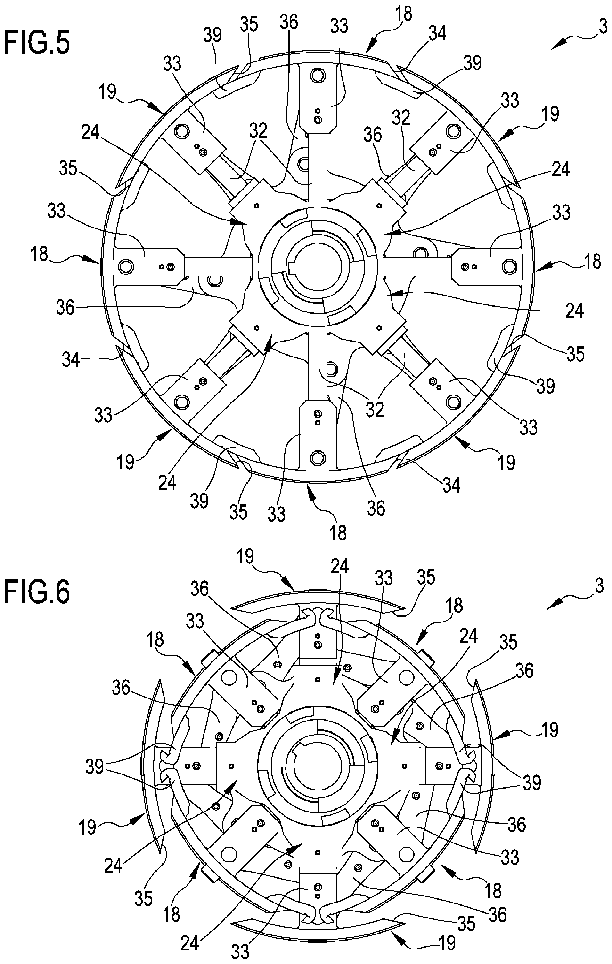

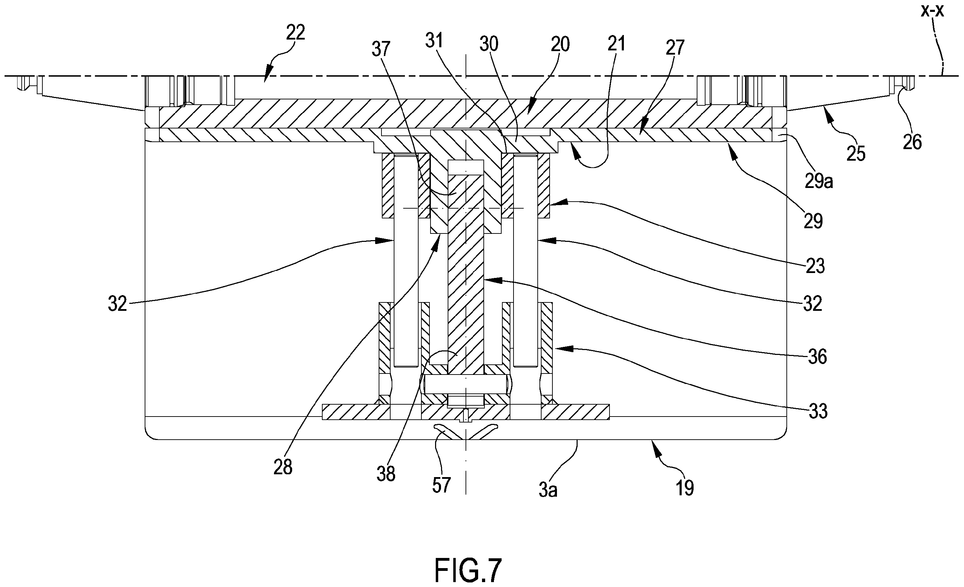

As is visible in figures 5 and 6, the forming drum 3 comprises a plurality of circumferential sectors 18, 19 adapted to define the radially outer surface 3a of the drum itself 3. Each of the sectors 18, 19 has the shape of a curved plate. The forming drum 3 further comprises a first central body 20 coaxial with the symmetry axis "x-x" of the drum 3 and a second central body 21 it too coaxial with the symmetry axis "x-x" (figure 7). The first and the second central body 20, 21 are connected with each other so as to be able to mutually rotate around the symmetry axis "x-x" and are also connected to the circumferential sectors 18, 19 that surround them.

According to the illustrated embodiment, the first central body 20 comprises a central shaft 22 coaxial with the symmetry axis "x-x" and symmetric with respect to a centerline plane of the forming drum 3. The central shaft 22 carries two radial crowns 23 axially spaced from each other, placed on the sides of the centerline plane and each comprising a plurality (four in the embodiment illustrated in figures 5 and 6) of radial projections 24. The central shaft 22 has, at each of the opposite axial ends, a frustoconical axially projecting element 25. Each of the axially projecting elements 25 has a shaped end 26 defined by an annular recess.

The second central body 21 comprises a tubular body 27 that is radially outer with respect to the central shaft 22. The tubular body 27 and the central shaft 22 can rotate with respect to each other around the symmetry axis "x-x" for a predefined angle. The tubular body 27 has an axially intermediate portion 28 provided with a radial crown and two tubular end portions 29. The axially intermediate portion 28 is situated between the radial crowns 23 of the first central body 20. The tubular end portions 29 are connected to the axially intermediate portion 28 by means of axial elements 30 that pass through slots 31 obtained in the radial crowns 23 of the first central body 20 (figure 7).

Each axially projecting element 25 of the first central body 20 is axially extended beyond the respective tubular end portion 29 of the second central body 21. In addition, the tubular end portion 29 of the second central body 21 has two recesses 29a obtained on one edge of said end 29 and placed on opposite sides with respect to the symmetry axis "x-x".

The first central body 20 also carries a plurality of rods 32 that are extended along radial directions. Such rods 32 are integral with the first central body 20. In the embodiment illustrated in figures 5 and 6, the first central body 20 comprises four rods 32, each of which extended from one of the four radial projections 24 of each of the radial crowns 23 and four further rods 32, each of which extended from an intermediate zone situated between two radial projections 24 of each of the radial crowns 23. In total, there are sixteen of said rods 32, two by two axially side-by-side. Each pair of axially side-by-side rods 32 is connected to a circumferential sector 18, 19. In particular, each of the rods 32 of a pair is slidably inserted in a slide 33 integral with the respective circumferential sector 18, 19 and placed on a radially inner side of said circumferential sector 18, 19. The rods 32 and the slides 33 form first connection mechanisms.

More precisely the circumferential sectors 18, 19 define first circumferential sectors 18 mounted on the rods 32 which are extended from the intermediate zones (situated between the radial projections 24), and second circumferential sectors 19 mounted on the rods 32 which are extended from the radial projections 24. Each of the first circumferential sectors 18 has, at the circumferential ends thereof, radially outer bevels 34 and each of the second circumferential sectors 19 has, at the circumferential ends thereof, radially inner bevels 35.

The second central body 21 carries a plurality of connecting rods 36 (figures 5, 6 and 7). Each connecting rod 36 has its first end 37 hinged to the axially intermediate portion 28 of the tubular body 27 and a second end 38, opposite the first end 37, hinged to a respective circumferential sector 18, 19, in a zone placed between the two slides 33. The connecting rods 36 define second connection mechanisms.

The circumferential sectors 18, 19 are radially movable between a radially contracted configuration and a radially expanded configuration by means of a relative rotation between the first central body 20 and the second central body 21 around the symmetry axis "x-x".

In the radially expanded configuration (figure 5), all the circumferential sectors 18, 19 are situated at the maximum distance from the symmetry axis "x-x", with the slides 33 placed at the radial ends of the rods 32. In such configuration, the radially outer surfaces of the sectors 18, 19 all have the same radius (with respect to the symmetry axis "x-x") and define the radially outer surface 3a of the forming drum 3, which is preferably substantially continuous. The radially outer bevels 34 are facing and adjoining the radially inner bevels 35. Each of the first circumferential sectors 18 also has, at the circumferential ends thereof, appendages 39 which in the expanded configuration internally touch the circumferential ends of the second circumferential sectors 19.

The relative rotation between the first and the second central body 20, 21 around the symmetry axis "x-x" in a first rotation sense causes the rotation of the first ends 37 of the connecting rods 36 around the symmetry axis "x-x" and with respect to the first and second circumferential sectors 18, 19. The connecting rods 36 therefore drive said first and second circumferential sectors 18, 19 towards the symmetry axis "x-x" and towards the first and second central body 20, 21, guided in such motion by the rods 32, until the radially contracted configuration is reached.

In the radially contracted configuration (figure 6), the slides 33 touch the radial crowns 23 of the first central body 20. The first circumferential sectors 18 lie closest to the symmetry axis "x-x" with respect to the second circumferential sectors 19.

The relative rotation between the first and the second central body 20, 21 around the symmetry axis "x-x" in a second rotation sense, opposite the first, ensures that the connecting rods 36 push radially outward the first and the second circumferential sectors 18, 19, which radially move away from the symmetry axis "x-x" and from the first and second central body 20, 21, always guided by said rods 32, until being brought into the radially expanded configuration of figure 5.

The grip unit 8 is structured for picking up, supporting, transporting and releasing the forming drum 3 and also for making it expand or contract.

The grip unit 8 comprises a support frame 40 constrained at a lower end of the vertical arm 14. In the illustrated embodiment, the support frame 40 has a box-like shape and houses a first shaft 41 which is extended along a respective longitudinal rotation axis which coincides with the symmetry axis "x-x" of the forming drum 3 when the latter is carried by the grip unit 8. The longitudinal rotation axis "x-x" is parallel to the first direction "X" and perpendicular to the feed directions "F" for the semifinished products 17 on the conveyor belts 15.

The first shaft 41 is rotatably supported, e.g. by means of bearings, in a second shaft 42 in turn rotatably supported, e.g. by means of bearings, within a support tube 43 integral with the support frame 40. The second shaft 42 is coaxial and external with respect to the first shaft 41. The first shaft 41 is hollow and houses, at its interior, an auxiliary shaft 44 which is integral with said first shaft 41 in the rotation motion around the longitudinal axis "x-x" while it can axially slide for a predefined travel in said first shaft 41.

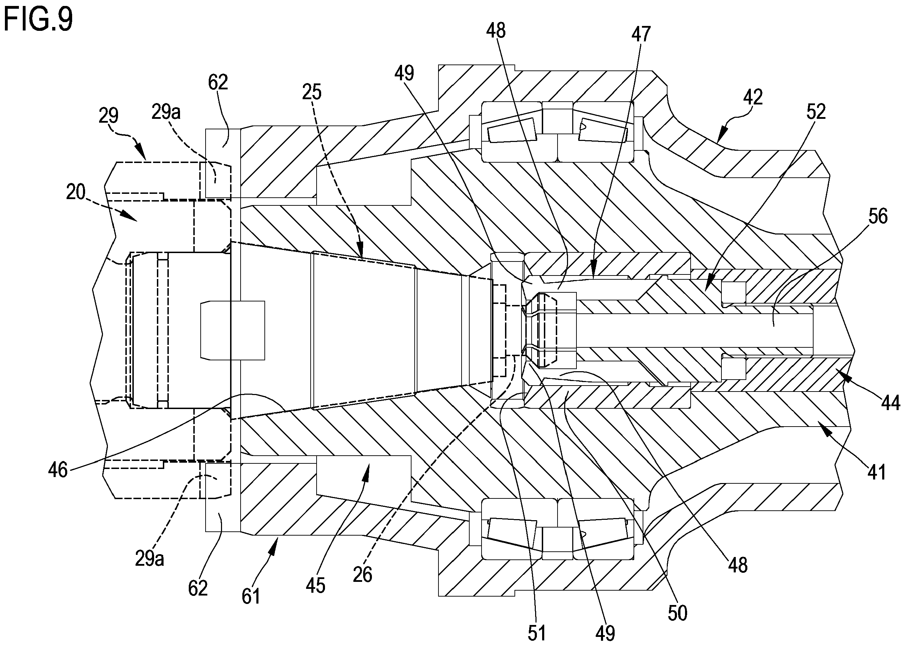

The first shaft 41 has a distal end 45 comprising first grip devices removably engageable with the axially projecting conical element 25 of the first central body 20 of the forming drum 3. Such first grip devices are defined by a seat 46 with axial extension, frustoconical and counter-shaped to the axially projecting element 25, and by a gripper 47 situated inside said seat 46. The gripper 47 comprises arms 48 movable between an open position and a closed position (figure 9). In the open position, free ends of the arms 48 are more spaced from the longitudinal axis "x-x" than in the closed position. Said free ends have radially inner reliefs 49 configured to be engaged in the annular recess obtained at the shaped end 26 of the axially projecting element 25. Abutment elements 50 are situated in the first shaft 41 in radially outer position with respect to the arms 48 of the gripper 47 and integral with said first shaft 41. Said abutment elements 50 have a beveled axial end 51 against which the free ends of the arms 48 operate.

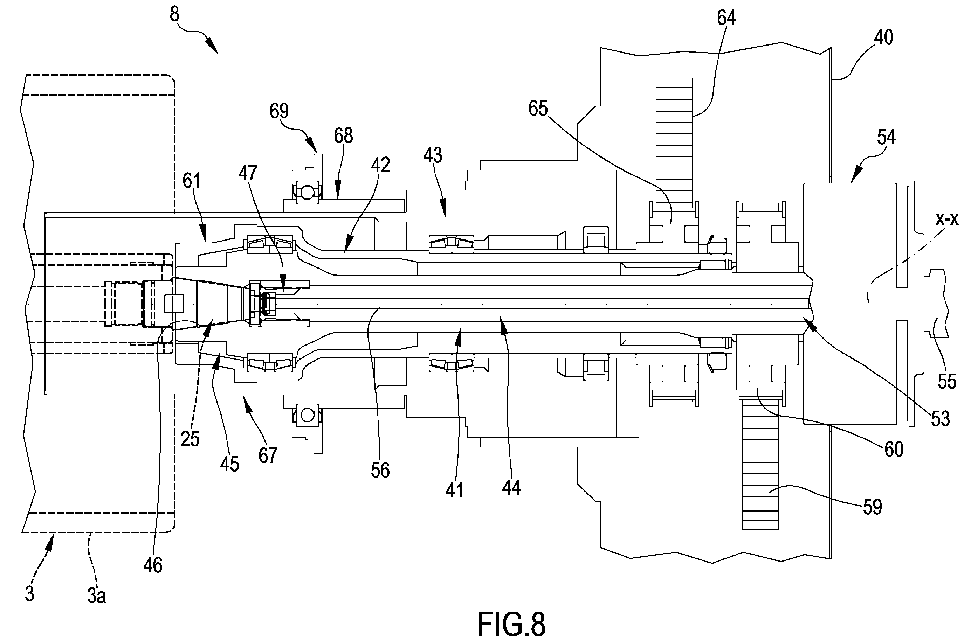

The gripper 47 is placed on a distal end 52 of the auxiliary shaft 44. A proximal end 53 of the same auxiliary shaft 44, opposite the distal end 52, is operatively connected to a pneumatic actuator 54 (schematically illustrated in figure 8). The pneumatic actuator 54 is mounted on the support frame 40 and lies at a proximal end of the first shaft 41. The pneumatic actuator 54 is connectable by means of a rotary joint 55 to a suction and/or pressurized air source, not illustrated.

The pneumatic actuator 54 is configured for axially moving the auxiliary shaft 44 in the first shaft 41 between an advanced position and a retreated position. In the advanced position, the free ends of the arms 48 of the gripper 47 are moved towards the distal end 45 of the first shaft 41 and are free to be elastically and radially dilated and to slide on the beveled axial ends 51 of the abutment elements 50. In the retreated position, said free ends of the arms 48 are more spaced from the distal end 45 than in the advanced position. In addition, the free ends of the arms 48 of the gripper 47 cannot be radially dilated because they are retained by portions of the abutment elements 50 adjacent to the beveled axial ends 51 closer to the longitudinal axis "x-x" than said beveled axial ends 51. The axial travel of the auxiliary shaft 44 and the gripper 47 between the advanced position and the retreated position is several centimeters.

When the gripper 47 is in the advanced position, it is capable of coupling the axially projecting element 25 of the forming drum 3 which is inserted in the frustoconical seat 46. The shaped end 26 in fact has the shape of a mushroom head with tilted surfaces which, axially forced against the gripper 47, cause the spreading of the arms 48 (free to be bent) and the insertion of the radially inner reliefs 49 in the annular recess that delimits said shaped end 26. At this point, if the gripper 47 is retreated by means of the pneumatic actuator 54, the radially inner reliefs 49 are radially tightened around the shaped end 26, radially blocked by the abovementioned portions of the abutment elements 50. In this configuration, the axially projecting element 25 is blocked and integral both in rotation and in translation with the first shaft 41 and the auxiliary shaft 44.

Within the auxiliary shaft 44, a suction duct 56 is obtained which is extended along the longitudinal axis "x-x" which, on one side, is in fluid communication with the rotary joint 55 and on the other side is in fluid communication (by means of non-illustrated ducts) with suction ducts 57 (figure 7) leading to the radially outer surface 3a of the forming drum 3.

A first motor 58 is installed on the support frame 40 and is connected to the first shaft 41 by means of a first transmission belt 59 partially wound on a first toothed wheel 60 integral with the first shaft 41 and coaxial with the longitudinal axis "x-x". the first toothed wheel 60 is situated at the proximal end of the first shaft 41 (which exits outward from a proximal end of the second shaft 42) and at the pneumatic actuator 54.

The second shaft 42 has its distal end 61 comprising second grip devices removably engageable with the tubular end portion 29 of the second central body 21. Such second grip devices are defined by two keys 62 shaped on one edge of the distal end of the second shaft 42 and placed on opposite sides with respect to the longitudinal axis "x-x". Such keys 62 are configured for being axially inserted in the recesses 29a of the tubular end portion 29 of the second central body 21.

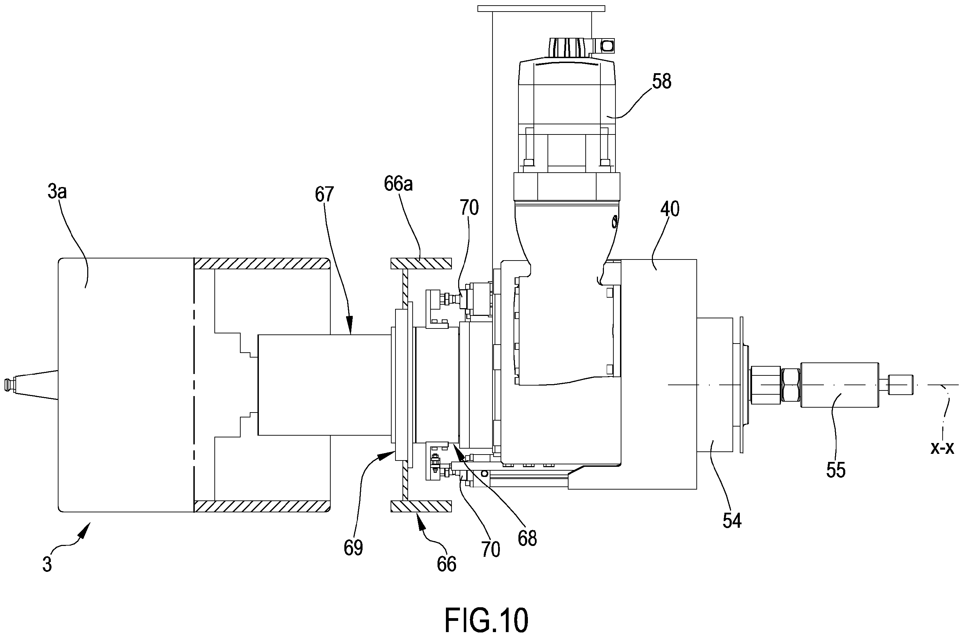

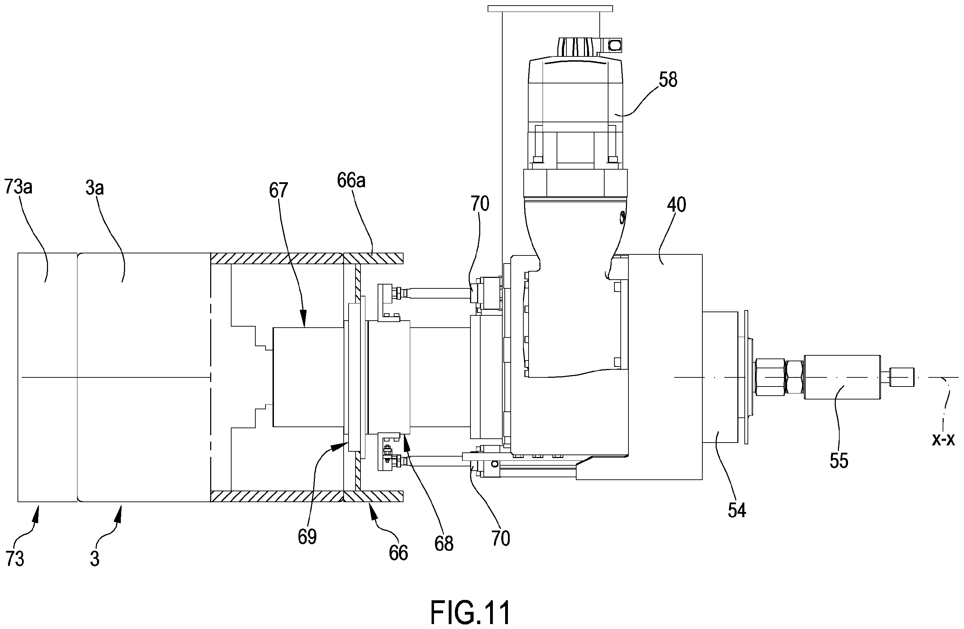

A second motor 63 is installed on the support frame 40 and is connected to the second shaft 42 by means of a second transmission belt 64 partially wound on a second toothed wheel 65 integral with the second shaft 42 and coaxial with the longitudinal axis "x-x". The second toothed wheel 65 is situated at the proximal end of the second shaft 42 and at the first toothed wheel 60 of the first shaft 41. The grip unit 8 also supports and moves a first annular support element 66 coaxial with the longitudinal axis "x-x" (figures 10 and 11). The first annular support element 66 has an auxiliary radially outer surface 66a. The first annular support element 66 is intended to be moved close to the forming drum 3 so as to enlarge the abutment surface of the semifinished product and receive one of the axial end flaps of the sleeve that is formed.

For such purpose, the grip unit 8 comprises a movement group for moving the first annular support element 66. The movement group comprises an axial guide 67 constituted by a tubular body integral with the support frame 40, coaxial with the longitudinal axis "x-x" and arranged all around the distal ends of the first shaft 41 and second shaft 42. Such axial guide 67 is axially extended beyond said distal ends and surrounds, when the forming drum 3 is supported by the grip unit 8, the tubular body 27 of the second central body 21 of said forming drum 3. A slide 68 is axially movable on the axial guide 67 and carries, in a radially outer position with respect thereto, an annular body 69 mounted on said slide 68 by means of bearings and hence free to rotate around the axial guide 67. The annular body 69 supports the first annular support element 66. The slide 68 is moved along the axial direction by a pair of pneumatic cylinders 70, each of which connected to the support frame 40 and to said slide 68 (figures 10 and 11). The pneumatic cylinders 70 are in fluid connection with the rotary joint 55 through non-illustrated ducts. The handling device 7 comprises a control unit 71, schematically represented in figure 1, which is operatively connected to the motors, not illustrated, which move the horizontal arm 12, the trolley 13, the vertical arm 14 and to the first motor 58, to the second motor 63, to the pneumatic actuator 54, to the pneumatic cylinders 70. The control unit 71 is configured to control the non-illustrated motors and spatially move the grip unit 8 and is configured to control the different elements of the grip unit 8.

In particular, the control unit 71 is configured to control the first motor 58 and the second motor 63 in electrical axis in a manner so as to rotate, with the same angular speed, the first shaft 41 and the second shaft 42 and rotate the first central body 20 and the second central body 21, integral with each other, of the forming drum 3. In this manner the forming drum 3 rotates around the symmetry axis "x-x" without changing its configuration.

The control unit 71 is also configured for controlling only the second motor 63 and rotating only the second shaft 42 and keeping the first shaft 41 fixed. In such a manner, only the second body 21 of the forming drum 3 is rotated and the radially outer surface 3a is moved between the radially contracted configuration and the radially expanded configuration.

The carcass building line 2 further comprises a housing station 72 for a second annular support element 73 intended to be axially coupled to the forming drum 3 on the opposite side with respect to the abovementioned first annular support element 66. The second annular support element 73 has an auxiliary radially outer surface 73a. The second annular support element 73 is intended to be moved close to the forming drum 3 in a manner so as to enlarge the abutment surface of the semifinished product 17 and receive one of the axial end flaps of the sleeve that is formed (figure 11).

The carcass building line 2 further comprises a work station 74 for positioning the annular anchoring structures 102, 102', such work station 74 reachable by the grip unit 8 by means of the handling devices 7 (figure 1).

During use and in accordance with the process according to the invention, the grip unit 8 of the handling device 7 picks up the forming drum 3 from a suitable station, not illustrated, by coupling, by means of the gripper 47 of the first shaft 41, the shaped end 26 and inserting the keys 62 of the second shaft 42 in the recesses 29a of the tubular end portion 29 of the second central body 21. The movement group mounted on the grip unit 8 axially moves the first annular support element 66 close to the forming drum 3. The handling device 7 also carries the forming drum 3 to the station 72 that houses the second annular support element 73 and couples it, for example by means of non-illustrated magnetic devices, to the axial end of the forming drum 3 opposite that supported by the grip unit 8. The handling device 7 carries the forming drum 3 and the annular support elements 66, 73 integral therewith to one or more of the delivery stations 4. At said delivery stations 4, the semifinished products 17 of the carcass structure are wound on the radially outer surface 3a by rotating, integral with each other, the first body 20 and the second body 21 of the forming drum 3 (by means of the integral rotation of the first shaft 41 and the second shaft 42). The suction ducts 57 leading to the radially outer surface 3a of the forming drum 3 are used for retaining a head end of the first semifinished product 17 that is wound. After each winding, a pressing group, not illustrated, consolidates the joint by pressing it and control groups e.g. by means of laser, not illustrated, verify the correct positioning of the semifinished product 17 and the correct execution of the joint. Once formed, the carcass sleeve comprising the different wound semifinished products 17, the handling devices 7 carry the forming drum 3 to the station 72 where the second annular support element 73 is released, freeing one of the axial end flaps of the carcass sleeve, and by means of the movement group, the first annular support element 66 is subsequently moved away from the forming drum 3, also freeing the other axial end flap of the carcass sleeve. At this point, the handling devices 7 carry the forming drum 3 to the work station 74 for positioning the annular anchoring structures 102. The forming drum 3 carrying the sleeve is uncoupled from the grip unit 8 and coupled to the work station 74. In said work station 74, the annular anchoring structures 102, 102' are fit on axial end flaps of the sleeve and said edges bent above the annular anchoring structures 102, 102', in a manner so as to form the turn-ups 101a, 101a' of the carcass structure. At this point, the forming drum 3 with the sleeve provided with the turn-ups is re-coupled by the grip unit 8 and carried to an unloading station, not illustrated. The grip unit 8 contracts the forming drum 3 (rotating only the second shaft 42 and keeping the first shaft 41 fixed) in a manner so as to release the sleeve from the drum 3 itself and deliver it to the unloading station. The cycle starts again by using the same forming drum 3 with the coupling, at the housing station 72, of the second annular support element 73.

## Claims

1. Process for building tyres for vehicle wheels, comprising:
i. arranging a forming drum (3) having a radially outer surface (3a) and comprising a first body (20) and a second body (21) that are movable with respect to each other, wherein a relative movement between said first body (20) and said second body (21) causes the passage between a radially contracted configuration and a radially expanded configuration of the radially outer surface (3a);
ii. coupling the forming drum (3) by means of a grip unit (8) of a handling device (7);
iii. carrying said forming drum (3), by means of the handling device (7), to at least one delivering station (4) for delivering semifinished products (17) and making it rotate around a symmetry axis (x-x) thereof in order to wind at least one semifinished product (17) on the radially outer surface (3a) and form a sleeve;
iv. contracting the radially outer surface (3a) of the forming drum (3) in order to release the sleeve from said drum (3);
wherein coupling the forming drum (3) comprises:
removably engaging the first body (20) of the forming drum (3) with first grip devices associated with a first shaft (41) of the grip unit (8);
removably engaging the second body (21) of the forming drum (3) with second grip devices associated with a second shaft (42) of the grip unit (8) coaxial and external with respect to the first shaft (41).

2. Process as claimed in claim 1, wherein said first grip devices are placed at a distal end (45) of said first shaft (41) and said second grip devices are placed at a distal end (61) of said second shaft (42).

3. Process as claimed in claim 1 or 2, wherein removably engaging the first body (20) of the forming drum (3) with the first grip devices comprises: coupling, with a gripper (47) belonging to the first grip devices, an axially projecting element (25) of the forming drum (3).

4. Process as claimed in claim 3 when dependent on claim 2, wherein removably engaging the first body (20) of the forming drum (3) with the first grip devices comprises: placing the axially projecting element (25) of the forming drum (3) in a seat (46) defined at the distal end (45) of the first shaft (41).

5. Process as claimed in claim 2, 3 when dependent on claim 2 or 4, wherein removably engaging the second body (21) of the forming drum (3) with the second grip devices comprises: axially and removably inserting at least one key (62) defined at the distal end (61) of the second shaft (42) in a respective recess (29a) delimited in the second body (21) of the forming drum (3).

6. Process as claimed in one of the preceding claims, wherein rotating the forming drum (3) comprises: rotating the first shaft (41) and the second shaft (42), integral with each other, in order to rotate together the first body (20) and the second body (21) of the forming drum (3).

7. Process as claimed in one of the preceding claims, wherein contracting the radially outer surface (3a) of the forming drum (3) comprises: rotating only the second shaft (42) and keeping the first shaft (41) fixed in order to rotate only the second body (20) of the forming drum (3).

8. Process as claimed in one of the preceding claims, comprising:
arranging a first annular support element (66) on the grip unit (8);
axially moving the first annular support element (66) close to the forming drum (3), wherein said first annular support element (66) has an auxiliary radially outer surface (66a) intended to receive an axial end flap of said at least one semifinished product (17).

9. Apparatus for building tyres for vehicle wheels, comprising:
at least one forming drum (3) having a radially outer surface (3a) and comprising a first body (20) and a second body (21) that are movable with respect to each other, wherein a relative movement between said first body (20) and said second body (21) causes the passage between a radially contracted configuration and a radially expanded configuration of the radially outer surface (3a);
at least one delivering station (4) for delivering semifinished products (17);
a handling device (7) configured to carry said forming drum (3) to said at least one delivering station (4) for delivering semifinished products (17) and to make it rotate around a symmetry axis (x-x) thereof;
wherein the handling device (7) comprises at least one grip unit (8) comprising:
a support frame (40);
a first shaft (41) comprising first grip devices associated with said first shaft (41);
wherein said first grip devices (46, 47) are removably engageable with the first body (20) of the forming drum (3);
a second shaft (42), coaxial and external with respect to the first shaft (41) and rotatably mounted on the support frame (40) around the symmetry axis (x-x);
wherein the first shaft (41) is rotatably mounted in the second shaft (42); wherein the second shaft (42) comprises second grip devices associated with said second shaft (42); wherein said second grip devices are removably engageable with the second body (21) of the forming drum (3);
at least one motor (58, 63) adapted to rotate the first shaft (41) and/or the second shaft (42).

10. Apparatus as claimed in claim 9, wherein said first grip devices are placed at a distal end (45) of said first shaft (41) and said second grip devices are placed at a distal end (61) of said second shaft (42).

11. Apparatus as claimed in claim 9 or 10, wherein the forming drum (3) comprises: a plurality of circumferential sectors (18,19) defining the radially outer surface (3a); wherein the first body (20) is radially central and has first mechanisms for connecting with the circumferential sectors (18, 19); wherein the second body (21) is radially central and has second mechanisms for connecting with said circumferential sectors (18, 19); wherein, by means of a relative rotation of the first body (20) and the second body (21), the circumferential sectors (18, 19) are radially movable between the radially contracted configuration and the radially expanded configuration.

12. Apparatus as claimed in claim 10, wherein the forming drum (3) comprises an axially projecting element (25) and the first grip devices have a seat (46) defined at the distal end (45) of the first shaft (41) and configured for housing said axially projecting element (25).

13. Apparatus as claimed in claim 10, wherein the second grip devices comprise at least one key (62) defined at the distal end (61) of the second shaft (42) and configured for being axially and removably inserted in a respective recess (29a) delimited in the second body (21) of the forming drum (3) and for preventing relative rotational movements between the second body (21) and the second shaft (42).

14. Apparatus as claimed in one of the claims from 9 to 13, wherein the grip unit (8) comprises a movement group for moving a first annular support element (66) to be associated with the forming drum (3), wherein said movement group is situated in radially outer position with respect to the second shaft (42).

15. Apparatus as claimed in claims 9 to 14, wherein the movement group comprises a support member for the first annular support element (66) and at least one movement device operatively connected to the support member in order to axially move said support member and said first annular support element (66) between a position in which the first annular support element (66) lies close to the forming drum (3) and a position in which the first annular support element (66) is axially spaced from said forming drum (3).

## Patentansprüche

1. Verfahren zur Herstellung von Reifen für Fahrzeugräder, umfassend:
i. Anordnen einer Formtrommel (3), die eine radial äußere Oberfläche (3a) aufweist und einen ersten Körper (20) und einen zweiten Körper (21) umfasst, die relativ zueinander beweglich sind, wobei eine Relativbewegung zwischen dem ersten Körper (20) und dem zweiten Körper (21) den Übergang zwischen einer radial kontrahierten Konfiguration und einer radial expandierten Konfiguration der radial äußeren Oberfläche (3a) bewirkt;
ii. Koppeln der Formtrommel (3) mittels einer Greifeinheit (8) einer Handhabungseinrichtung (7);
iii. Tragen der Formtrommel (3) mittels der Handhabungseinrichtung (7) zu mindestens einer Abgabestation (4) zum Abgeben von Halbfabrikaten (17) und Drehen der Formtrommel um eine Symmetrieachse (x-x) davon, um mindestens ein Halbfabrikat (17) auf der radial äußeren Oberfläche (3a) aufzuwickeln und eine Hülle zu bilden;
iv. Kontrahieren der radial äußeren Oberfläche (3a) der Formtrommel (3), um die Hülle von der Trommel (3) zu lösen;
wobei das Koppeln der Formtrommel (3) umfasst,
den ersten Körper (20) der Formtrommel (3) mit ersten Greifeinrichtungen, die einer ersten Welle (41) der Greifeinheit (8) zugeordnet sind, lösbar in Eingriff zu bringen;
den zweiten Körper (21) der Formtrommel (3) mit zweiten Greifeinrichtungen, die einer zweiten Welle (42) der Greifeinheit (8) zugeordnet sind, die in Bezug auf die erste Welle (41) koaxial und außenliegend ist, lösbar in Eingriff zu bringen.

2. Verfahren nach Anspruch 1, wobei die ersten Greifeinrichtungen an einem distalen Ende (45) der ersten Welle (41) platziert werden und die zweiten Greifeinrichtungen an einem distalen Ende (61) der zweiten Welle (42) platziert werden.

3. Verfahren nach Anspruch 1 oder 2, wobei das Bringen des ersten Körpers (20) der Formtrommel (3) in einen lösbaren Eingriff mit den ersten Greifeinrichtungen umfasst, ein axial vorstehendes Element (25) der Formtrommel (3) mit einem zu den ersten Greifeinrichtungen gehörenden Greifer (47) zu koppeln.

4. Verfahren nach Anspruch 3, sofern von Anspruch 2 abhängig, wobei das Bringen des ersten Körpers (20) der Formtrommel (3) in einen lösbaren Eingriff mit den ersten Greifeinrichtungen umfasst, das axial vorstehende Element (25) der Formtrommel (3) in einem Sitz (46) zu platzieren, der am distalen Ende (45) der ersten Welle (41) definiert ist.

5. Verfahren nach Anspruch 2, 3, sofern von Anspruch 2 abhängig, oder 4, wobei das Bringen des zweiten Körpers (21) der Formtrommel (3) in einen lösbaren Eingriff mit den zweiten Greifeinrichtungen umfasst, axial mindestens einen Keil (62), der am distalen Ende (61) der zweiten Welle (42) definiert ist, entfernbar in eine entsprechende Aussparung (29a) einzufügen, die im zweiten Körper (21) der Formtrommel (3) abgegrenzt ist.

6. Verfahren nach einem der vorhergehenden Ansprüche, wobei das Drehen der Formtrommel (3) umfasst, die erste Welle (41) und die zweite Welle (42), die integral miteinander ausgebildet sind, zu drehen, um gemeinsam den ersten Körper (20) und den zweiten Körper (21) der Formtrommel (3) zu drehen.

7. Verfahren nach einem der vorhergehenden Ansprüche, wobei das Kontrahieren der radial äußeren Oberfläche (3a) der Formtrommel (3) umfasst, nur die zweite Welle (42) zu drehen und die erste Welle (41) festzuhalten, um nur den zweiten Körper (20) der Formtrommel (3) zu drehen.

8. Verfahren nach einem der vorhergehenden Ansprüche, umfassend:
Anordnen eines ersten ringförmigen Tragelements (66) an der Greifeinheit (8);
axiales Bewegen des ersten ringförmigen Tragelements (66) in die Nähe der Formtrommel (3), wobei das erste ringförmige Tragelement (66) eine radial äußere Hilfsfläche (66a) aufweist, die dazu bestimmt ist, eine axiale Endlasche des mindestens einen Halbfabrikats (17) aufzunehmen.

9. Vorrichtung zur Herstellung von Reifen für Fahrzeugräder, umfassend:
mindestens eine Formtrommel (3) mit einer radial äußeren Oberfläche (3a) und mit einem ersten Körper (20) und einem zweiten Körper (21), die relativ zueinander beweglich sind, wobei eine Relativbewegung zwischen dem ersten Körper (20) und dem zweiten Körper (21) den Übergang zwischen einer radial kontrahierten Konfiguration und einer radial expandierten Konfiguration der radial äußeren Oberfläche (3a) bewirkt;
mindestens eine Abgabestation (4) zum Abgeben von Halbfabrikaten (17);
eine Handhabungseinrichtung (7), die dafür ausgelegt ist, die Formtrommel (3) zu der mindestens einen Abgabestation (4) zum Abgeben von Halbfabrikaten (17) zu tragen und sie um eine Symmetrieachse (x-x) davon zu drehen;
wobei die Handhabungseinrichtung (7) mindestens eine Greifeinheit (8) umfasst, die Folgendes umfasst:
einen Tragrahmen (40);
eine erste Welle (41), umfassend erste Greifeinrichtungen, die der ersten Welle (41) zugeordnet sind; wobei die ersten Greifeinrichtungen (46, 47) lösbar in Eingriff mit dem ersten Körper (20) der Formtrommel (3) bringbar sind;
eine zweite Welle (42), die in Bezug auf die erste Welle (41) koaxial und außenliegend ist und um die Symmetrieachse (x-x) drehbar am Tragrahmen (40) montiert ist; wobei die erste Welle (41) in der zweiten Welle (42) drehbar gelagert ist; wobei die zweite Welle (42) zweite Greifeinrichtungen umfasst, die der zweiten Welle (42) zugeordnet sind; wobei die zweiten Greifeinrichtungen lösbar in Eingriff mit dem zweiten Körper (21) der Formtrommel (3) bringbar sind;
mindestens einen Motor (58, 63), der geeignet ist, die erste Welle (41) und/oder die zweite Welle (42) zu drehen.

10. Vorrichtung nach Anspruch 9, wobei die ersten Greifeinrichtungen an einem distalen Ende (45) der ersten Welle (41) platziert sind und die zweiten Greifeinrichtungen an einem distalen Ende (61) der zweiten Welle (42) platziert sind.

11. Vorrichtung nach Anspruch 9 oder 10, wobei die Formtrommel (3) eine Vielzahl von Umfangssektoren (18, 19) umfasst, die die radial äußere Oberfläche (3a) definieren; wobei der erste Körper (20) radial mittig ist und erste Mechanismen zum Verbinden mit den Umfangssektoren (18, 19) aufweist; wobei der zweite Körper (21) radial mittig ist und zweite Mechanismen zum Verbinden mit den Umfangssektoren (18, 19) aufweist; wobei durch ein relatives Drehen des ersten Körpers (20) und des zweiten Körpers (21) die Umfangssektoren (18, 19) radial beweglich sind, und zwar zwischen der radial kontrahierten Konfiguration und der radial expandierten Konfiguration.

12. Vorrichtung nach Anspruch 10, wobei die Formtrommel (3) ein axial vorstehendes Element (25) umfasst und die ersten Greifeinrichtungen einen Sitz (46) aufweisen, der am distalen Ende (45) der ersten Welle (41) definiert ist und dafür ausgelegt ist, das axial vorstehende Element (25) unterzubringen.

13. Vorrichtung nach Anspruch 10, wobei die zweiten Greifeinrichtungen mindestens einen Keil (62) umfassen, der am distalen Ende (61) der zweiten Welle (42) definiert ist und dafür ausgelegt ist, axial und entfernbar in eine entsprechende Aussparung (29a) eingefügt zu werden, die im zweitem Körper (21) der Formtrommel (3) abgegrenzt ist, um relative Drehbewegungen zwischen dem zweiten Körper (21) und der zweiten Welle (42) zu verhindern.

14. Vorrichtung nach einem der Ansprüche 9 bis 13, wobei die Greifeinheit (8) eine Bewegungsgruppe zum Bewegen eines ersten ringförmigen Tragelements (66), das mit der Formtrommel (3) verbunden werden soll, umfasst, wobei die Bewegungsgruppe in radial äußerer Position in Bezug auf die zweite Welle (42) angeordnet ist.

15. Vorrichtung nach den Ansprüchen 9 bis 14, wobei die Bewegungsgruppe ein Stützelement für das erste ringförmige Tragelement (66) und mindestens eine Bewegungseinrichtung umfasst, die mit dem Stützelement wirkverbunden ist, um das Stützelement und das erste ringförmige Tragelement (66) axial zu bewegen, und zwar zwischen einer Position, in welcher das erste ringförmige Tragelement (66) nahe bei der Formtrommel (3) angeordnet ist, und einer Position, in welcher das erste ringförmige Tragelement (66) axial von der Formtrommel (3) beabstandet ist.

## Revendications

1. Procédé de construction de pneus pour roues de véhicules, comprenant le fait :
i. d'agencer un tambour de formation (3) ayant une surface radialement externe (3a) et comprenant un premier corps (20) et un deuxième corps (21) qui sont mobiles l'un par rapport à l'autre, où un mouvement relatif entre ledit premier corps (20) et ledit deuxième corps (21) provoque le passage entre une configuration radialement contractée et une configuration radialement déployée de la surface radialement externe (3a) ;
ii. de coupler le tambour de formation (3) au moyen d'une unité de préhension (8) d'un dispositif de manipulation (7) ;
iii. de transporter ledit tambour de formation (3), au moyen du dispositif de manipulation (7), vers au moins un poste de distribution (4) pour distribuer des produits semi-finis (17) et le faire tourner autour d'un axe de symétrie (x-x) de celui-ci afin d'enrouler au moins un produit semi-fini (17) sur la surface radialement externe (3a) et former un manchon ;
iv. de contracter la surface radialement externe (3a) du tambour de formation (3) afin de libérer le manchon dudit tambour (3) ;
dans lequel le couplage du tambour de formation (3) comprend le fait :
d'engager de manière amovible le premier corps (20) du tambour de formation (3) avec des premiers dispositifs de préhension associés à un premier arbre (41) de l'unité de préhension (8) ;
d'engager de manière amovible le deuxième corps (21) du tambour de formation (3) avec des deuxièmes dispositifs de préhension associés à un deuxième arbre (42) de l'unité de préhension (8) coaxial et externe par rapport au premier arbre (41).

2. Procédé tel que revendiqué dans la revendication 1, dans lequel lesdits premiers dispositifs de préhension sont placés au niveau d'une extrémité distale (45) dudit premier arbre (41) et lesdits deuxièmes dispositifs de préhension sont placés au niveau d'une extrémité distale (61) dudit deuxième arbre (42).

3. Procédé tel que revendiqué dans la revendication 1 ou 2, dans lequel l'engagement amovible du premier corps (20) du tambour de formation (3) avec les premiers dispositifs de préhension comprend le fait : de coupler, avec un préhenseur (47) appartenant aux premiers dispositifs de préhension, un élément faisant saillie axialement (25) du tambour de formation (3).

4. Procédé tel que revendiqué dans la revendication 3 lorsqu'elle dépend de la revendication 2, dans lequel l'engagement amovible du premier corps (20) du tambour de formation (3) avec les premiers dispositifs de préhension comprend le fait : de placer l'élément faisant saillie axialement (25) du tambour de formation (3) dans un siège (46) défini au niveau de l'extrémité distale (45) du premier arbre (41).

5. Procédé tel que revendiqué dans la revendication 2, 3 lorsqu'elle dépend de la revendication 2 ou 4, dans lequel l'engagement amovible du deuxième corps (21) du tambour de formation (3) avec les deuxièmes dispositifs de préhension comprend le fait : d'insérer axialement et de manière amovible au moins une clavette (62) définie au niveau de l'extrémité distale (61) du deuxième arbre (42) dans un évidement respectif (29a) délimité dans le deuxième corps (21) du tambour de formation (3).

6. Procédé tel que revendiqué dans l'une des revendications précédentes, dans lequel la rotation du tambour de formation (3) comprend le fait : de faire tourner le premier arbre (41) et le deuxième arbre (42), solidaires l'un de l'autre, afin de faire tourner ensemble le premier corps (20) et le deuxième corps (21) du tambour de formation (3).

7. Procédé tel que revendiqué dans l'une des revendications précédentes, dans lequel la contraction de la surface radialement externe (3a) du tambour de formation (3) comprend le fait : de faire tourner uniquement le deuxième arbre (42) et de maintenir fixe le premier arbre (41) afin de faire tourner uniquement le deuxième corps (20) du tambour de formation (3).

8. Procédé tel que revendiqué dans l'une des revendications précédentes, comprenant le fait :
d'agencer un premier élément de support annulaire (66) sur l'unité de préhension (8) ;
de déplacer axialement le premier élément de support annulaire (66) à proximité du tambour de formation (3), où ledit premier élément de support annulaire (66) a une surface auxiliaire radialement externe (66a) destinée à recevoir un rabat d'extrémité axiale dudit au moins un produit semi-fini (17).

9. Appareil de construction de pneus pour roues de véhicules, comprenant :
au moins un tambour de formation (3) ayant une surface radialement externe (3a) et comprenant un premier corps (20) et un deuxième corps (21) qui sont mobiles l'un par rapport à l'autre, où un mouvement relatif entre ledit premier corps (20) et ledit deuxième corps (21) provoque le passage entre une configuration radialement contractée et une configuration radialement déployée de la surface radialement externe (3a) ;
au moins un poste de distribution (4) pour distribuer des produits semi-finis (17) ;
un dispositif de manipulation (7) configuré pour transporter ledit tambour de formation (3) vers ledit au moins un poste de distribution (4) pour distribuer des produits semi-finis (17) et pour le faire tourner autour d'un axe de symétrie (x-x) de celui-ci ;
dans lequel le dispositif de manipulation (7) comprend au moins une unité de préhension (8) comprenant :
un cadre de support (40);
un premier arbre (41) comprenant des premiers dispositifs de préhension associés audit premier arbre (41) ; où lesdits premiers dispositifs de préhension (46, 47) peuvent s'engager de manière amovible avec le premier corps (20) du tambour de formation (3) ;
un deuxième arbre (42), coaxial et externe par rapport au premier arbre (41) et monté en rotation sur le cadre de support (40) autour de l'axe de symétrie (x-x) ; où le premier arbre (41) est monté en rotation dans le deuxième arbre (42) ; où le deuxième arbre (42) comprend des deuxièmes dispositifs de préhension associés audit deuxième arbre (42) ; où lesdits deuxièmes dispositifs de préhension peuvent s'engager de manière amovible avec le deuxième corps (21) du tambour de formation (3) ;
au moins un moteur (58, 63) adapté pour faire tourner le premier arbre (41) et/ou le deuxième arbre (42).

10. Appareil tel que revendiqué dans la revendication 9, dans lequel lesdits premiers dispositifs de préhension sont placés au niveau d'une extrémité distale (45) dudit premier arbre (41) et lesdits deuxièmes dispositifs de préhension sont placés au niveau d'une extrémité distale (61) dudit deuxième arbre (42).

11. Appareil tel que revendiqué dans la revendication 9 ou 10, dans lequel le tambour de formation (3) comprend : une pluralité de secteurs circonférentiels (18, 19) définissant la surface radialement externe (3a) ; où le premier corps (20) est radialement central et a des premiers mécanismes pour se relier aux secteurs circonférentiels (18, 19) ; où le deuxième corps (21) est radialement central et a des deuxièmes mécanismes pour se relier auxdits secteurs circonférentiels (18, 19) ; où, par rotation relative du premier corps (20) et du deuxième corps (21), les secteurs circonférentiels (18, 19) sont radialement mobiles entre la configuration radialement contractée et la configuration radialement déployée.

12. Appareil tel que revendiqué dans la revendication 10, dans lequel le tambour de formation (3) comprend un élément faisant saillie axialement (25) et les premiers dispositifs de préhension ont un siège (46) défini au niveau de l'extrémité distale (45) du premier arbre (41) et configuré pour recevoir ledit élément faisant saillie axialement (25).

13. Appareil tel que revendiqué dans la revendication 10, dans lequel les deuxièmes dispositifs de préhension comprennent au moins une clavette (62) définie au niveau de l'extrémité distale (61) du deuxième arbre (42) et configurée pour être insérée axialement et de manière amovible dans un évidement respectif (29a) délimité dans le deuxième corps (21) du tambour de formation (3) et pour empêcher des mouvements de rotation relatifs entre le deuxième corps (21) et le deuxième arbre (42).

14. Appareil tel que revendiqué dans l'une des revendications 9 à 13, dans lequel l'unité de préhension (8) comprend un groupe de déplacement pour déplacer un premier élément de support annulaire (66) à associer au tambour de formation (3), où ledit groupe de déplacement est situé dans une position radialement externe par rapport au deuxième arbre (42).

15. Appareil tel que revendiqué dans les revendications 9 à 14, dans lequel le groupe de déplacement comprend un organe de support pour le premier élément de support annulaire (66) et au moins un dispositif de déplacement relié de manière fonctionnelle à l'organe de support afin de déplacer axialement ledit organe de support et ledit premier élément de support annulaire (66) entre une position dans laquelle le premier élément de support annulaire (66) se trouve à proximité du tambour de formation (3) et une position dans laquelle le premier élément de support annulaire (66) est axialement espacé dudit tambour de formation (3).
